# EUROPEAN PATENT SPECIFICATION

(11) **EP 2 272 723 B1**
(45) Date of publication and mention of the grant of the patent: **11.09.2013**
(21) Application number: 09164902.0
(22) Date of filing: 08.07.2009
(51) Int. Cl.: B60R 21/013

(54) **Method and control device for the activation of passenger safety means in a vehicle**
Verfahren und Steuervorrichtung zur Aktivierung eines Passagierschutzmittels in einem Fahrzeug
Procédé et dispositif de contrôle pour l'activation de supports de sécurité du passager dans un véhicule

(43) Date of publication of application: 12.01.2011
(73) Proprietor: ROBERT BOSCH GMBH, 70442 Stuttgart (DE); Volvo Car Corporation, 405 31 Göteborg (SE)
(72) Inventor: Rauh, Christian, 81377, Muenchen (DE); Becker, Jens, 70597, Stuttgart (DE); Nilsson, Paer, 41671, Goeteborg (SE); Lich, Thomas, 71409, Schwaikheim (DE); Moldenhauer, Maike, 71111, Waldenbuch (DE); Wogel, Anders, 42470, Olofstorp (SE); Axelson, Anders, 42341, Torslanda (SE); Doerr, Alfons, 70597, Stuttgart (DE); Harda, Peter, 41324, Goeteborg (SE); Rittler, Stephan, 73660, Urbach (DE); Hiemer, Marcus, 88074, Kehlen (DE)

(56) References cited:
- WO-A-2004/043745
- DE-A1- 10 022 173
- DE-A1- 10 234 624
- DE-A1- 19 740 019
- DE-A1-102005 042 203
- DE-A1-102007 015 768

## Description

### Prior art

The present invention relates to a method for the activation of passenger safety means in a vehicle according to claim 1, a control device according to claim 10 as well as a computer program product according to claim 11.

It is a known fact that the detection of a high impulse transfer to the passenger cell as a result of a crash with another traffic participant or a moving or stationary obstacle may be used for the activation of pyrotechnic restraint means in a vehicle. Depending on the restraint means used, the time-optimized activation thereof may serve to gently reduce the relative movements of the car occupants towards the passenger cell as a result of the impulse transfer, thereby minimizing the risk of injuries.

In principle, a differentiation may be made between time-critical and time-uncritical restraint means. While conventional front and side airbags are laid out to provide a protection effect for a small fraction of a second only following their activation, restraint means such as pyrotechnic belt tighteners and "cold" curtain airbags are capable of offering protection for a substantially longer period of time, i.e. possibly even up to several minutes. Which restraint means are activated in the case of an accident depends on the type and severity of the accident. In the case of an accident, time-critical and time-uncritical restraint means are generally activated within a very small time frame by the trigger functions of the electronic safety system. For a multitude of a simple accident scenarios, a time coupling of the activation of time-critical and time-uncritical restraint means makes sense but is not mandatory. If the time-uncritical restraint means were activated considerably bly sooner, the protection effect thereof would not be reduced but possibly rather increased. This specifically applies when, in complex driving scenarios, this may serve to prevent an occupant movement relative to the passenger cell before the actual crash of the vehicle, as such a passenger movement may on the one hand significantly impair a protection effect of the time-critical restraint means and on the other hand may even cause injuries itself.

DE 10 2007 015 768 A1 discloses a method for operating restraint means, wherein, in a first stage, the unfolding of an airbag is effected prior to a crash as a reaction to a pre-crash detection system and, in a second stage, the controlling of the inflating of the airbag is effected as a reaction to acceleration signals of the vehicle.

DE 10022173 A1 discloses a process for triggering passenger protection systems in at least two different stages of an accident hazard and/or accident force, determined in accordance with sensor signals, with the passenger protection system being triggered directly at least when the second stage is reached. It is proposed that already when a first accident hazard and/or accident force stage is reached at least an indirect trigger command is sent to individual passenger protection systems, a specified time interval is started, and, in the event of the second accident hazard and/or accident force stage not being reached within their specified time interval, a cancel command is sent to cancel the indirect trigger commands. On receipt of such an indirect trigger command the passenger protection systems also start a relevant time interval, and in the event of the cancel command not being received on expiry of the said interval, they activate automatically the triggering of the passenger protection systems.

### Disclosure of the invention

On this background, the present invention presents a method, furthermore a control device employing this method and finally a respective computer program product according to the independent claims. Advantageous embodiments result from the respective dependent claims and the subsequent description.

The present invention provides a method for the activation of (e.g. irreversible) passenger safety means in a vehicle, the method comprising:
- receiving a plurality of parameter signals from different sensors, the parameter signals representing different physical variables during a drive of the vehicle;
- providing at least one of several individual event cascades, the event cascade representing a predefined temporal sequence of values of a plurality of the different parameter signals to be received;
- releasing a triggering of the passengers safety means in the vehicle if a chronological order of values of the different parameter signals corresponds to values of the provided event cascades, and
- triggering the released passenger safety means if at least one of the parameter signals or a combination of the parameter signals fulfils a trigger criterion.

Furthermore, the present invention provides a method for the activation of passenger safety means in a vehicle, the method comprising:
- receiving a plurality of parameter signals from different sensors, the parameter signals representing different physical variables during a drive of the vehicle;
- releasing a triggering of the passengers safety means in the vehicle when a plurality of the parameter signals is received in a predefined time interval; and
- triggering the released passenger safety means if at least one of the parameter signals or a combination of the parameter signals fulfils a trigger criterion.

The present invention further provides a control device configured to effect, control and/or implement the steps of the inventive method. This embodiment of the invention in the form of a control device also serves to achieve the object underlying the invention in a fast and efficient manner.

At hand, a control device may be an electric device, which processes sensor signals and, in dependence thereon, outputs control signals. The control device may comprise an interface, which may be configured in hardware and/or in software. In the case of a configuration in hardware, these interfaces may, for example, be part of a so-called system ASIC, which comprises diverse functions of the control device. However, it is also possible that the interfaces be individual, integrated circuits or at least partially consist of discrete components. In the case of a configuration in software, the interfaces may be software modules, which may be provided on a microcontroller next to other software modules, for example.

What is also advantageous is a computer program product with a program code stored on a machine-readable carrier such as a semiconductor memory, a hard disk or an optical memory and utilized for effecting and/or controlling the steps of the method according to any one of the aforementioned embodiments, when the program is executed on a control device.

The following invention is based on the finding that the triggering of the passenger safety means may be improved if a "filtering" of the trigger decisions is effected, with the result that only those (e.g. irreversible) passenger safety means are activated, which are highly probable to provide for good protection of the vehicle occupant. In this manner, known trigger algorithms may be used, which may preferredly be calibrated in a crash hall under laboratory conditions. By means of the evaluation of the temporal sequence of the respective drive parameter signals and/or the evaluation of a frequency of drive parameter signals occurred, correspondence to reality of these trigger algorithms, which are set under laboratory conditions, may be substantially improved. This improvement may be achieved by effecting, in parallel or preliminarily, a situation classification that is independent of the trigger algorithm, based on the sensor data already available, this situation classification facilitating the enabling of the suitable trigger sequences output by the trigger algorithm. As a result, only those passenger safety means and/or restraint means are activated or triggered, which, on the one hand, are released by a respective situation classification algorithm, and, on the other hand, are for example triggered by an accident classification and/or a respective trigger algorithm. However, the triggering of the released passenger safety means is not mandatory for carrying out the invention; the invention mainly covers the novel release of the passenger safety means for a subsequent triggering. However, in a special embodiment of the present invention the triggering may also be part of a thus improved method (or device) such that also a triggering step may be comprised in an advantageous embodiment of the present invention. The triggering step then must not use the same parameter signals as the step of releasing but, as the signals most often are already provided to a respective control device, it might be technically very easy to implement also a triggering decision algorithm on the basis of the already available (i.e. the already received) parameter signals.

Moreover, using event cascades provides the advantage that event cascades frequently occurring, as determined by means of accident research, may be used and implemented as predefined temporal sequences of drive parameter signals. In the embodiment of the method, these predefined temporal sequences may then be drawn upon. A comparison easy to implement in terms of numerics and circuitry may then serve to perform the respective situation classification in the step of enabling, and the respective drive situation such as a vehicle free flight or a skidding, for example, may be recognized.

The present invention offers the advantage that, by means of the releasing of the respective passenger safety means by the respective situation classification, only those safety means actually required may be triggered. This prevents cost-intensive false triggering of (irreversible) safety means not absolutely required. As a result, a later activation of these (irreversible) safety means saved is made possible, so that the safety of the vehicle occupants may be increased as a whole. At the same time, established trigger algorithms for triggering the respective safety means may still be used, which means that the approach proposed herein merely offers an improvement of those safety functions already existing.

In an advantageous embodiment of the present invention, the step of releasing may comprise a signal processing which is performed prior and independently from a signal processing of the step of triggering. Such an embodiment of the present invention offers the benefit that known and tested trigger algorithms do not have to be changed. Simultaneously, fast signal processing for the situation classification may be performed in the step of enabling, wherein results from the trigger algorithm do not necessarily have to be used. This form of independent signal processing in the steps of releasing and triggering guarantees that the situation classification maintains a correspondence to reality despite the fact that the trigger algorithms are set under laboratory conditions.

Furthermore, in another aspect of the present invention the step of releasing may include a release of irreversible passenger safety means. This provides the advantage that the irreversible safety means can be saved for triggering in a later situation in which they might be needed more urgently.

Furthermore, the step of releasing may comprise a release of a long-term passenger safety means which is adapted to provide a safety function for an occupant of the vehicle for at least a quarter of a second, advantageously of at least half a second and specifically of at least one second. Such an embodiment of the present invention provides the advantage that time-uncritical safety means such as e.g. a belt tightener or a curtain airbag may be triggered as early as in the step of enabling and therefore be activated at an early stage, whereby the vehicle occupant may be retained in their vehicle seat in an optimum position. Such time-uncritical safety means provide the benefit of maintaining their function for a prolonged period of time, whereas time-critical safety means provide protection for a very short period of time only.

In addition, the step of releasing furthermore may include a release of reversible passenger safety means. In this manner, an additional safety function may be provided with increased costs being avoided, as it may be recognizable, e.g. as early as in the step of enabling, that an accident triggering the irreversible passenger safety means will occur shortly.

Specifically, the step of releasing may include setting an enable parameter when first received parameters signals have values corresponding to values of first stages of the event cascade and wherein the step of releasing includes resetting the enable parameter when subsequently received parameter signal values no longer correspond to values of subsequent corresponding stages of the event cascade. In this manner, it may be guaranteed that a temporal sequence of drive parameter signals not corresponding to any event cascade will not effect enabling of the triggering of the passenger safety means. Given the fact that accident research has provided a wide range of event cascades, so that virtually any behavior prior to an accident may correspondingly be mapped by such an event cascade, it may be assumed, with high probability that a temporal sequence of drive parameter signals not corresponding to any event cascade will not lead to a directly following accident.

In an advantageous embodiment of the present invention, the step of receiving may include receiving at least one parameter signal representing a vehicle acceleration, a vehicle rotation rate, a pressure on the vehicle, a wheel speed of a wheel of the vehicle, a steering angle of vehicle, a braking pressure of the vehicle, a driving torque of the vehicle, a slip angle of the vehicle, a speed of the vehicle, a belt extension length and/or data from sensors for occupant position detection. Such an embodiment of the present invention offers the advantage that one or more drive parameter signals of sensors already incorporated in the vehicle may be used further, so that a multiple utilization of these sensor signals may have an effect of increased safety for vehicle occupants.

Also, the step of providing may include providing an event cascade having a plurality of cascade stages, wherein at least one cascade stage represents an emergency braking, a vehicle crash, under- or oversteering, a change to problematic ground, a curb overrun, a slope or ramp drive, a vehicle side contact with an obstacle, an impact of an object onto the vehicle outside the area of the passenger cell, a vehicle free flight, a vehicle pitch movement, critical road adhesion, an abnormal roll resistance or a qualification of a crash object by means of an anticipatory sensor system. The time flow of such vehicle movements is well known from accident research, so that precise event cascades for the situation classification of such drive situations may be established. These precise event cascades allow for very exact enabling of appropriate fire sequences for the respective passenger safety means.

In the following, the invention is exemplarily explained in detail by means of the accompanying drawings, in which:
- Fig. 1: shows a block diagram of a first embodiment of the present invention;
- Fig. 2: shows a representation of a possible event cascade for the evaluation of sensor signals for an accident scenario occurring;
- Fig. 3: shows a representation of a further possible event cascade for the eval- uation of sensor signals for an accident scenario occurring;
- Fig. 4: shows a block diagram of the coaction of the triggering and the enabling of the safety means;
- Fig. 5: shows a further block diagram of the coaction of the triggering and the enabling of the safety means;
- Fig. 6a: shows a representation of a time flow of the evaluation of events in an event cascade and a subsequent trigger decision for the activation of the safety means;
- Fig. 6b: shows a representation of a time flow of the evaluation of events and a subsequent trigger decision for the activation of the safety means;
- Fig. 7: shows a flow chart of an embodiment of the present invention in the form of a method; and
- Fig. 8: shows a flow chart of a further embodiment of the present invention in the form of a method.

In the figures below, like or similar elements may be provided with like or similar reference numbers, with a repeated description being dispensed with. In addition, the figures of the drawings, the description thereof as well as the claims include numerous features in combination. A person skilled in the art clearly understands that these features may also be regarded individually or that they may be combined to form further combinations that are not explicitly described herein. Furthermore, the invention may in the following description be discussed using different measures and dimensions, whereby stating these measures and dimensions is not to be understood such that the invention is to be understood as limited to these measures and dimensions.

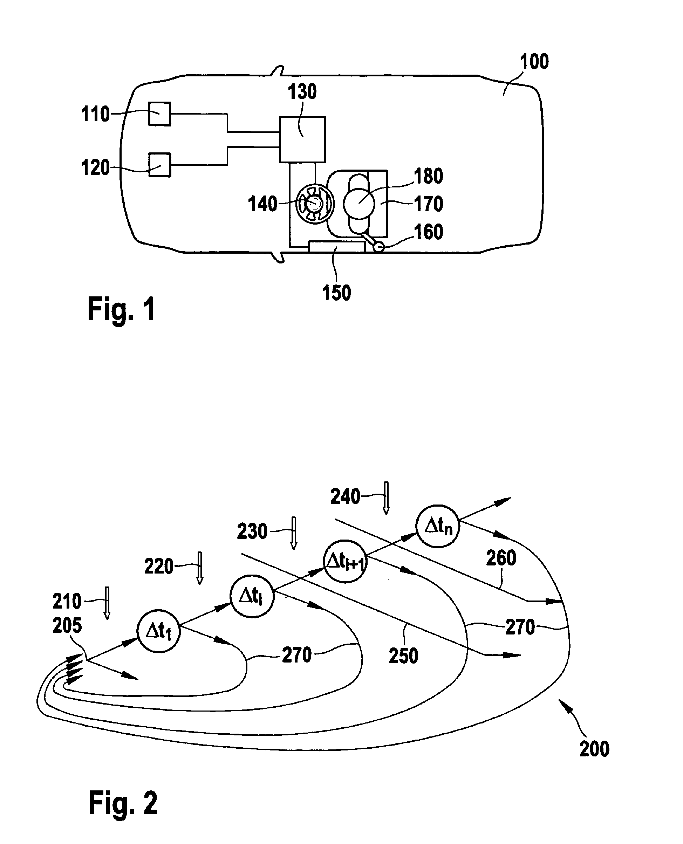

Fig. 1 shows a block diagram of a first embodiment of the present invention. Here, a vehicle 100 comprises several sensors such as e.g. an acceleration sensor 110 and a pressure sensor 120 (representative of further known sensor types in vehicle), which forward respective sensor signals and/or drive parameter signals to an evaluation unit 130. The evaluation unit 130, which may also be formed as a control device, may trigger passenger safety means such as e.g. a front airbag 140, a side or curtain airbag 150 or a belt tightener 160 at a seat 170 of an occupant 180 of the vehicle 100. The front airbag 140 and the side airbag 150 are irreversible safety means, while the belt tightener 160 may be designed to be reversible or irreversible. Furthermore, it is to be noted that the front airbag 140 will have a protection effect for a very short period of time only, while both the side airbag 150 and belt tightener 160 are characterized by a considerably longer protection effect. For this reason, the front airbag 140 should be fired at the exact right point in time. The side or curtain airbag 150 and the belt tightener 160 may, however, be activated considerably sooner, therefore retaining the occupant 180 in an optimum position on the vehicle seat 170.

The triggering of the respective safety means 140 to 180 may be effected by the evaluation unit 130 in accordance with the procedure described in detail in the following. Specifically, conventional trigger algorithms may be use and correspondingly supplemented.

Among other things, the invention is aimed at largely uncoupling the activation of time-critical and time-uncritical restraint means. Furthermore, the invention is aimed at ensuring the early activation of time-uncritical restraint means in dangerous drive situations, which, in complex accident events, may be attributed to a point in time considerable prior to the actual vehicle crash, in which the time-critical restraint means should be activated. The early activation of time-uncritical restraint means in dangerous situations may ensure that the occupants will be fixed in a position utilizable for time-critical restraint means in a timely manner and that a basic protection will be guaranteed in the case of protracted, complex occupant movements. The embodiments of the invention exemplary presented here serve to make sure that a notable danger of injury to the occupants may be reliably recognized in the following time flow of the vehicle movement, whereby the early activation of irreversible restraint means is made possible.

One aspect of the invention is the establishment of the fact that complex accident scenarios are conditioned by a time chain of "dangerous events". The "dangerous events" may comprise:
- A minor vehicle crash and notable yaw movement induced thereby
- emergency braking
- under- and oversteering
- change to problematic ground
- roadedge recovery maneuver (accident scenario typical for North America, characterized by a high severity of injuries)
- slope and ramp drive
- vehicle side tackling with arbitrary obstacle (dangerous with respect to specific subsequent accident)
- off zone side accident (point of impact), i.e. a lateral impact of an object on the vehicle observed outside the cell area, so that a risk of injury for vehicle occupants by the impacting object is not very high
- vehicle free flight
- vehicle pitch movement
- critical road adhesion and abnormal roll resistance
- qualification of a crash object by means of anticipatory sensor system

Depending on the sensor configuration, e.g. of the sensors 110 and 120, each event may be detected separately. It has been proven by accident research that, even if each event as such does not pose any dangerous drive situation, a certain temporal sequence of the events may be linked to typical critical accident scenarios justifying early activation of time-uncritical restraint means.

According to the embodiments presented here, the invention includes the detection and/or recognition of the individual events mentioned by the evaluation of acceleration, rotation rate or pressure data from sensors distributed throughout the vehicle, the steering angle sensor, the wheel speeds, the driving torque at the wheel, the braking pressure, the belt extension length and/or the data from sensors for occupant position recognition. Furthermore, other parameters may be used, which enable the drawing of conclusions to the drive situation of the vehicle 100.

Fig. 2 shows a representation of a possible event cascade 200 for an accident scenario occurring.

Beginning with a starting point 205, a first event 210 is detected, which may be an understeering, an uneven even road surface, and impact detection or a free flight detection, for example. Following this, a time interval Δt₁ is waited for, after which a check is made, whether, after this time interval Δt₁, a second predefined event 220 occurs, which may again e.g. be a detection of an uneven road surface, and impact detection, a free flight detection or an emergency braking. With the help of the event cascade present, the occurrence of further events 230 and/or 240 may be checked after respective time intervals Δtₗ, Δtₗ₊₁ and Δtₙ, in order to enable the respective safety means. For example, in passing through the event cascade represented in Fig. 2, a sufficient database may be available after the occurrence of the second event 220, the database justifying an enabling 250 of an early activation of an irreversible belt tightener. Furthermore, after the occurrence of the third event 230, there may be given a sufficient database for an enabling 260 of an earlier activation of an irreversible curtain airbag. In this manner, the event cascade 200 (which is just an example for any sequence of events arrange in a timely order) may also at different points in time allow for the enabling of different safety means. The enabling of the respective safety means may be effected for a predefined time slot only. Therefore, by a further subsequent evaluation of the different stages of the event cascade 200, a more accurate and precise prediction of the subsequent accident to be expected may be achieved.

Furthermore, it may be noted that, for the case that a correspondingly predefined event 220, 230 or 240 will not occur in a certain time interval, a resetting 270 of the event cascade 200 may be effected. This may guarantee that especially those sequences before an accident, which are known from accident research, are used for the enabling of the respective safety means. Other sequences of events will then not result in a triggering of the respective safety means by the respective trigger algorithms. This serves to prevent a cost-intensive faulty triggering of the safety means.

The representation in Fig. 2 therefore illustrates a concrete drive situation of the vehicle. If, in this case, three events (understeering followed by a rough road situation, ...) occur in a predefined temporal sequence, then the enabling or activation 250 of an early activation of BT (belt tighteners, irreversible) or the enabling or activation 260 of an early activation of IC (cold inflatable curtain bags, irreversible) may be effected.

In a manner correspondent to the complex accident scenarios to be addressed, the events detected may therefore be configured in the form of different event cascades, in the context of the invention. If, in a drive situation, a temporally predefined pattern of individual events is passed through, certain activation sequences of retaining means may be temporarily enabled. If a suitable subsequent event is not recognized along a configured event cascade within a given time slot, then the entire event cascade will be reset and the occurrence of another configured event cascade is waited for.

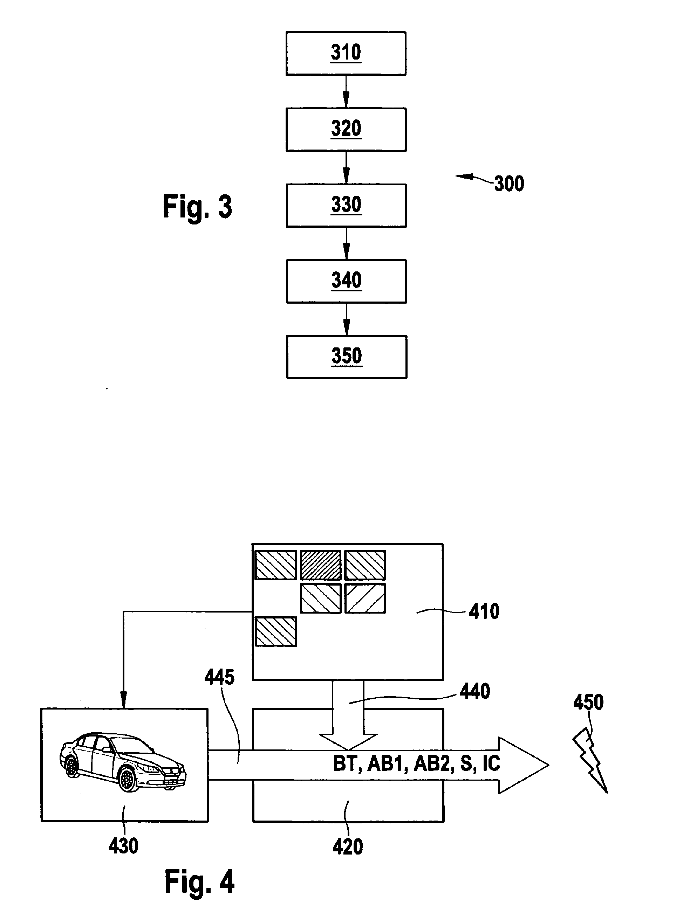

As a further example, a possible real accident scenario 300 is illustrated in Fig. 3. The accident scenario begins with the vehicle slightly colliding with a second vehicle on a country road, for example, (first event 310), whereby a skidding movement is induced and the vehicle is forced off the road. The detection of such a drive situation of the vehicle initiates the evaluation of an event cascade. At this point in time, the state of risks does not justify any triggering of restraint means. The vehicle leaves the road, whereby the ground under the vehicle changes from smooth ground to rough ground (event 320). This may be detected by a higher vibration level by the acceleration sensors, for example. This second situation of the change of ground is detected within the time slot Δt₁ and thus prevents the cascade evaluation from stopping. Within a further time slot Δt₂, the vehicle slides down a slope and rolls over on its right hand side (event 330). This third situation is again detected within a time slot Δt₂, which prevents the cascade evaluation from stopping. Within a further time slot, the driver reacts in the form of a dynamic steering movement and a braking intervention, which does not result in any notable reaction of the vehicle (event 340). This fourth situation of the change of ground is detected within the time slot Δt₃ and thus prevents the cascade evaluation from stopping. This means that, at this point in time at the latest and based on experiences gained from accident research, a critical state will have been reached, which justifies an early activation of an irreversible belt tightening in any case. Thus, an enabling 350 of defined belt tightener requests of the accident algorithm is effected, wherein the enabling will enable each fire request of an irreversible belt tightener for a following defined time slot in order to prevent, in this manner, a further minor collision from leading to severe injuries due to unfavorable occupant positioning. This acute danger situation for the occupant may in this case be significantly mitigated by the activation of the irreversible belt tightener.

Thus, the evaluation of a possible accident scenario may be effected by means of the event cascade according to Figs. 3 or 4, for example , the outcome of the scenario being still unknown at the end of the cascade. The preventive application of a restraint means may significantly mitigate the danger situation for the occupant at the end of the cascade.

According to the safety concept of the total system, the event cascade itself should not activate any irreversible restraint means but only enable activation requests. The activation requests for the irreversible restraint means or safety-critical actuators (e.g. emergency braking) are established by the accident function, which is applied and enabled in dependence on crash hall test data. Reversible restraint means may also be activated via the event cascade, depending on the safety concept of the total system.

The benefit of this requirement is that the situation as such will not result to the cost-intensive activation of an irreversible restraint means but may only be effected accordant to the established safety concept via a force impulse on the vehicle and the occupant.

Therefore, for the implementation of the approach proposed here, several components may be used, which are explained in greater detail in the following referring to Fig. 4. First, a library 410 of algorithm functions for the classification of events to be observed in the context of complex, real accident scenarios may be provided. Using this library, a situation classification may be effected by means of the data provided by the sensors. Furthermore, a configuration tool 420 may be provided, with the help of which relevant event cascades may be configured and visually represented on a time axis. Furthermore, an algorithm function 430 may be provided in the airbag control device, for example, which detects standardized accident types including an accident severity and starts appropriate fire sequences for the activation of restraint means. Thereby, an accident classification on the basis of the data supplied by the sensors is performed. Finally, and algorithm function 440 may be effected in the airbag control device, for example, which, using the above-mentioned function library 410 for the situation classification, recognizes a temporal sequence of events, allocates same to be event cascades configured and subsequently enables allocated fire sequences 445 (e.g. for a belt tightener BT, a first or second airbag AB1 or AB2, respectively, or a side or curtain airbag S or IC, respectively) for a triggering 450.

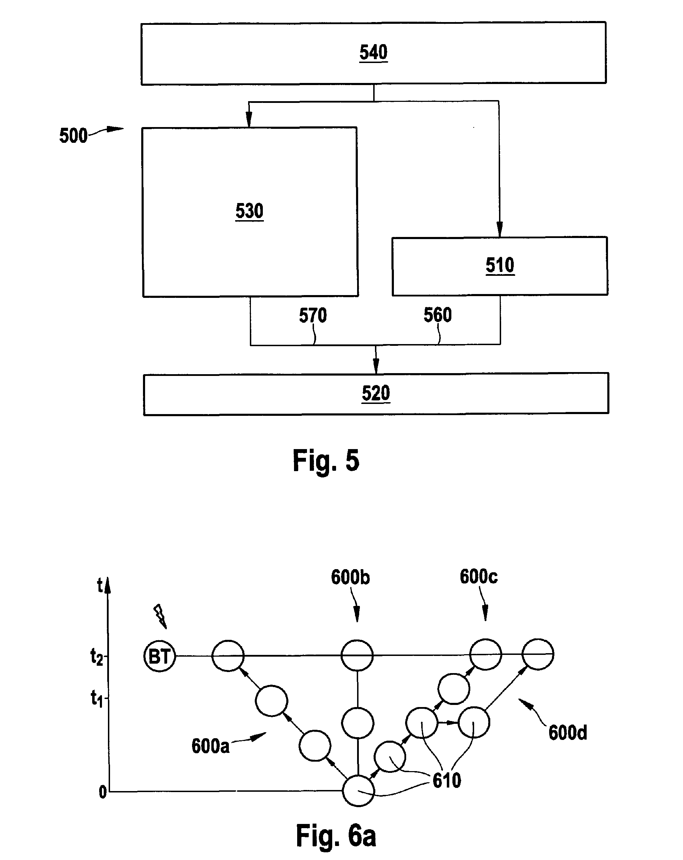

In principle, therefore, a differentiation is made between a situation classification and an accident classification. A respective representation of the evaluation 500 of sensor signals is again illustrated in Fig. 5 in the form of a block diagram, according to a further embodiment. The accident classification 510 constitutes the allocation of a type and severity of an accident and is calibrated e.g. by means of standardized accident tests (e.g. NCAP, IIHS,..) and usually used for the activation 520 of irreversible restraint systems. The situation classification 630 constitutes the allocation of a characteristic history of the actual accident (an emergency braking or a slope drive, for example, ...), which, based on the experiences gained from research of real accidents, requires and/or enables an adaption of the trigger strategy 520.

Both for the situation 510 and the accident classification 530, a multitude of data 540 of sensors distributed throughout the vehicle should be accounted for, the sensors usually being installed in the vehicle in the integration of active and passive safety systems. This data may represent an acceleration of the vehicle, a rotation rate of the vehicle, a pressure on the vehicle, a wheel speed of a wheel of the vehicle, a steering angle of the vehicle, a braking pressure of the vehicle, a driving torque of the vehicle, a slip angle of the vehicle, a vehicle speed or similar drive parameter values of the vehicle, for example. For the accident classification 510, however, only data from accident-suitable sensors should be used, i.e., the sensors should still be able to supply plausible data in an application of force of up to 100g.

The accident classification 510 is enabled on the basis of standardized crash hall tests. The activation of irreversible restraint means is triggered by the accident classification 510 (activation 560 of a fire sequence). The situation classification 530 enables the trigger request of the accident classification 510 in accordance with the configuration of the event cascades (enabling 570 of suitable fire sequences). What may be seen as a background for this distribution of tasks of accident and situation classification is the fact that the safety concept of the accident classification 510 may be maintained in the airbag control device. However, reversible restraint means may also be activated by the situation classification 530 alone (e.g. activation via the CAN bus).

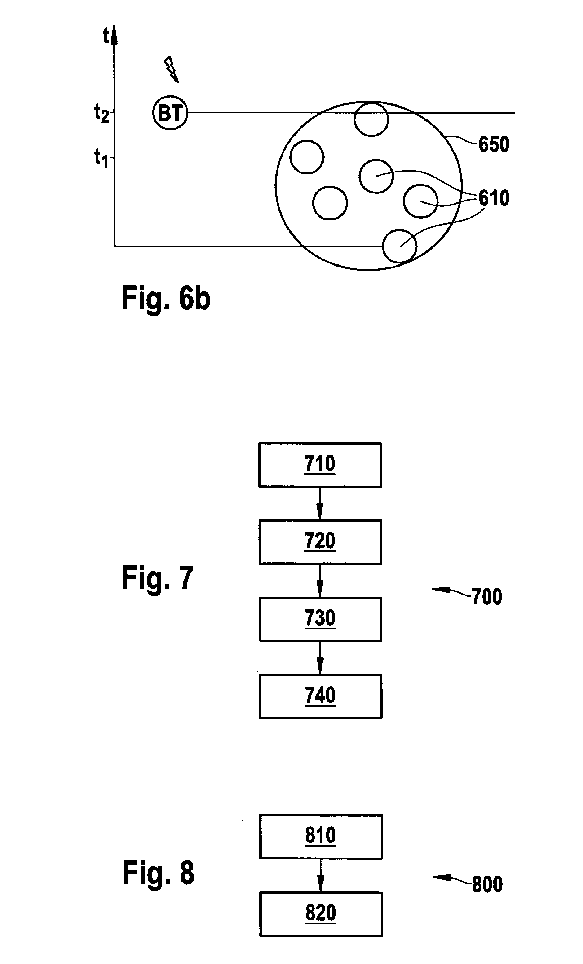

For the enabling 570 of activation requests of the accident classification 510, the following alternative options may be implemented, for example:
In a first version according to the representation of Fig. 6a, activation of a reversible or time-uncritical restraint means such as e.g. a BT (belt tightener) may be effected, provided that defined event cascades 600a to 600d are detected in a given time pattern. The temporal linking of the events 610 is an important aspect herein. At a starting time t=0, the first event 610 is detected and one of the individual event cascades 600a to 600d is selected based on the individual events 610 in the subsequent time intervals. Then, on the basis of the selected event cascade 600a, 600b, 600c or 600d, different safety means may be enabled for each of the detected event cascade 600a to 600d, which, based on information from accident research, offer the most effective protection for the occupant in the respective drive situation of the vehicle. Additionally and at a later point in time t₁, the accident classification is started so that, at a trigger time t₂, both the enabling of the respective safety means (a belt tightener in this case) and the trigger decision of the accident classification is effected.
In a second version according to the representation of Fig. 6b, an activation of a restraint means BT may be effected provided that a critical mass 650 of specific events 610 is recognized, e.g. six individual events 610 within a timeslot (e.g. from t=0 to t₂). The temporal succession of the events is in this second version of no importance. Such a situation classification may also serve to avoid faulty triggering of the safety means as, prior to an accident, often a multitude of specific drive situations hinting to the subsequent accident are at hand.

The approach presented here provides the possibility of enabling early activation of individual restraint means in dangerous situations without a concrete crash danger being detected. This means that the precrash sensors stated in the prior art may of course be used for the plausibilization of dangerous situations but are not mandatorily used for the autonomous activation of airbags. This means that, in the approach presented here, an activation of restraint means may e.g. only be effected in combination with finite rotation rates (roll rate, yaw rate, pitch rate) and/or acceleration data. The trigger algorithm is therefore divided in two independent principal algorithms: The first part addresses the accident classification based on e.g. acceleration and/or rotation rate signals and is usually calibrated in a crash hall. The difference to existing algorithms consists in the fact that the target algorithm, apart from a basic set of activation decisions ensuring a basic crash hall performance also in the field, generates additional activation decisions on the basis of acceleration and rotation rate signals, which are "filtered" by a second algorithm, a situation classification algorithm for the classification of the drive situation. The filtering may be configured as desired and is realized and enabled for example in the form of event cascades of dangerous events.

Fig. 7 shows a flow chart of a further embodiment of the present invention in the form of a method 700 for the activation of passenger safety means 140, 150, 160 in a vehicle 100. The method 700 comprises a step of receiving 710, 540 a plurality of parameter signals from different sensors, wherein the parameter signals represent different physical variables during a drive of the vehicle 100. Furthermore, the method 700 comprises a further step of providing 720 at least one event cascade 600a - 600d, the event cascade 600a - 600d representing a predefined temporal sequence of values of a plurality of parameter signals to be received. Additionally the present invention provides a step of releasing 730, 530 a triggering of the passengers safety means 140; 150, 160 in the vehicle 100 if a chronological order of values of received parameter signals corresponds to values in the provided event cascade 600a - 600d. Furthermore, the method 700 comprises an optional step of triggering 740 the released passenger safety means 140, 150, 160 if at least one parameter signal or a combination of parameter signals fulfils a trigger criterion.

Fig. 8 shows a flow chart of a further embodiment of the present invention in the form of a method 800 for the activation of passenger safety means 140, 150, 160 in a vehicle 100. The method 800 comprises a step of receiving 810, 540 a plurality of parameter signals from different sensors, the parameter signals representing different physical variables during a drive of the vehicle 100. Additionally the present invention provides a step of releasing 820, 530 a triggering of the passengers safety means 140, 150, 160 in the vehicle 100 if a predefined number of values of parameter signals is received in a predefined time interval.

## Claims

1. Method (700) for the activation of passenger safety means (140, 150, 160) in a vehicle (100), the method (700) comprising:
- receiving (710, 540) a plurality of parameter signals from different sensors, the parameter signals representing different physical variables during a drive of the vehicle (100);
- providing (720) at least one of several individual event cascades (600a - 600d), the event cascades (600a - 600d) representing a predefined temporal sequence of values of a plurality of the parameter signals to be received;
- releasing (730, 530) a triggering of the passengers safety means (140, 150, 160) in the vehicle (100) if a chronological order of values of different parameter signals corresponds to values of the provided event cascades (600a - 600d); and
- triggering (740, 520) the released passenger safety means (140, 150, 160) if at least one of the parameter signals or a combination of the parameter signals fulfils a trigger criterion.

2. Method (800) for the activation of passenger safety means (140, 150, 160) in a vehicle (100), the method (800) comprising:
- receiving (810, 540) a plurality of parameter signals from different sensors, the parameter signals representing different physical variables during a drive of the vehicle (100);
- releasing (820, 530) a triggering of the passengers safety means (140, 150, 160) in the vehicle (100) when a plurality of the parameter signals is received in a predefined time interval; and
- triggering (740, 520) the released passenger safety means (140, 150, 160) if at least one of the parameter signals or a combination of the parameter signals fulfils a trigger criterion.

3. Method (700, 800) according to one of the preceding claims, **characterized in that** the step of releasing (720, 530) comprises a signal processing which is performed prior and independently from a signal processing of the step of triggering (740, 520).

4. Method (700, 800) according to any one of the preceding claims, **characterized in that**, the step of releasing (720) includes a release of irreversible passenger safety means (140, 150, 160).

5. Method (700, 800) according to any one of the preceding claims, **characterized in that** the step of releasing (720) comprises a release of a long-term passenger safety means (140, 150, 160) which is adapted to provide a safety function for an occupant of the vehicle (100) for at least a quarter of a second, advantageously of at least half a second and specifically of at least one second.

6. Method (700, 800) according to any one of the preceding claims, **characterized in that** the step of releasing (720) furthermore includes a release of reversible passenger safety means (140, 150, 160).

7. Method (700, 800) according to any one of the preceding claims, **characterized in that** the step of releasing (720) includes setting an enable parameter when first received parameters signal values correspond to first stages of the event cascade (600a - 600d) and wherein the step of releasing includes resetting (270) the enable parameter when values of subsequently received parameter signals no longer correspond to values of subsequent stages of the event cascade (600a - 600d).

8. Method (700, 800) according to any one of the preceding claims, **characterized in that** the step of receiving (710) includes receiving at least one parameter signal representing a vehicle acceleration, a vehicle rotation rate, a pressure on the vehicle (100), a wheel speed of a wheel of the vehicle (100), a steering angle of vehicle (100), a braking pressure of the vehicle (100), a driving torque of the vehicle (100), a slip angle of the vehicle (100), a speed of the vehicle (100), a belt extension length and/or data from sensors for occupant position detection.

9. Method (700, 800) according to any one of the preceding claims, **characterized in that** the step of providing (720) includes providing an event cascade (600a - 600d) having a plurality of cascade stages, wherein at least one cascade (600a - 600d) stage (610) represents an emergency braking, a vehicle crash, under- or oversteering, a change to problematic ground, a curb overrun, a slope or ramp drive, a vehicle (100) side contact with an obstacle, an impact of an object onto the vehicle (100) outside the area of the passenger cell, a vehicle free flight, a vehicle pitch movement, critical road adhesion, an abnormal roll resistance or a qualification of a crash object by means of an anticipatory sensor system.

10. Method according to any one of the preceding claims, **characterized in that** in the step of providing one of the individual event cascades (600a to 600d) is selected based on the individual events (610) corresponding to the values of parameter signals to be received in subsequent time intervals and wherein, in the step of releasing, one distinct safety means is released corresponding to the detected event cascade (600a to 600d).

11. Control device (130), configured to effect and/or control the steps of a method (700, 800) according to any one of claims 1 to 10.

12. Computer program product with a program code stored on a machine-readable carrier, for effecting and/or controlling the steps of the method (700, 800) according to any one of claims 1 to 10, when the program is executed on a control device (130) or a data processing system.

## Patentansprüche

1. Verfahren (700) für die Aktivierung von Insassensicherheitsmitteln (140, 150, 160) in einem Fahrzeug (100), wobei das Verfahren (700) Folgendes umfasst:
- Empfangen (710, 540) von mehreren Parametersignalen von verschiedenen Sensoren, wobei die Parametersignale während einer Fahrt des Fahrzeugs (100) verschiedene physikalische Variable darstellen;
- Bereitstellen (720) mindestens einer von mehreren einzelnen Ereigniskaskaden (600a-600d), wobei die Ereigniskaskaden (600a-600d) eine vordefinierte zeitliche Abfolge von Werten von mehreren der zu empfangenden Parametersignale darstellen;
- Freigeben (730, 530) einer Auslösung der Insassensicherheitsmittel (140, 150, 160) in dem Fahrzeug (100), wenn eine chronologische Reihenfolge von Werten der verschiedenen Parametersignale den Werten der bereitgestellten Ereigniskaskaden (600a-600d) entspricht; und
- Auslösen (740, 520) der freigegebenen Insassensicherheitsmittel (140, 150, 160), wenn mindestens eines der Parametersignale oder eine Kombination der Parametersignale ein Auslösekriterium erfüllt.

2. Verfahren (800) für die Aktivierung von Insassensicherheitsmitteln (140, 150, 160) in einem Fahrzeug (100), wobei das Verfahren (800) Folgendes umfasst:
- Empfangen (810, 540) von mehreren Parametersignalen von verschiedenen Sensoren, wobei die Parametersignale während einer Fahrt des Fahrzeugs (100) verschiedene physikalische Variable darstellen;
- Freigeben (820, 530) einer Auslösung der Insassensicherheitsmittel (140, 150, 160) in dem Fahrzeug (100), wenn mehrere der Parametersignale in einem vordefinierten Zeitintervall empfangen werden; und
- Auslösen (740, 520) der freigegebenen Insassensicherheitsmittel (140, 150, 160), wenn mindestens eines der Parametersignale oder eine Kombination der Parametersignale ein Auslösekriterium erfüllt.

3. Verfahren (700, 800) nach einem der vorhergehenden Ansprüche, **dadurch gekennzeichnet, dass** der Schritt des Freigebens (730, 530) eine Signalverarbeitung umfasst, die vorher und unabhängig von einer Signalverarbeitung des Schritts des Auslösens (740, 520) durchgeführt wird.

4. Verfahren (700, 800) nach einem der vorhergehenden Ansprüche, **dadurch gekennzeichnet, dass** der Schritt des Freigebens (720) eine Freigabe von irreversiblen Insassensicherheitsmitteln (140, 150, 160) enthält.

5. Verfahren (700, 800) nach einem der vorhergehenden Ansprüche, **dadurch gekennzeichnet, dass** der Schritt des Freigebens (720) eine Freigabe von langfristigen Insassensicherheitsmitteln (140, 150, 160) umfasst, die dafür ausgelegt sind, für eine Zeitdauer von mindestens einer Viertelsekunde eine Sicherheitsfunktion für eine Person des Fahrzeugs (100) bereitzustellen, vorteilhafterweise für eine Zeitdauer von mindestens einer halben Sekunde und spezifisch für eine Zeitdauer von mindestens einer Sekunde.

6. Verfahren (700, 800) nach einem der vorhergehenden Ansprüche, **dadurch gekennzeichnet, dass** der Schritt des Freigebens (720) ferner eine Freigabe von reversiblen Insassensicherheitsmitteln (140, 150, 160) enthält.

7. Verfahren (700, 800) nach einem der vorhergehenden Ansprüche, **dadurch gekennzeichnet, dass** der Schritt des Freigebens (720) ein Setzen eines Freigabeparameters enthält, wenn die ersten empfangenen Parametersignalwerte den ersten Phasen der Ereigniskaskaden (600a-600d) entsprechen, und wobei der Schritt des Freigebens ein Zurücksetzen (270) des Freigabeparameters enthält, wenn Werte von nachfolgend empfangenen Parametersignalen nicht länger den Werten von nachfolgenden Phasen der Ereigniskaskaden (600a-600d) entsprechen.

8. Verfahren (700, 800) nach einem der vorhergehenden Ansprüche, **dadurch gekennzeichnet, dass** der Schritt des Empfangens (710) ein Empfangen eines Parametersignals enthält, das eine Fahrzeugbeschleunigung und/oder eine Fahrzeugdrehzahl und/oder einen Druck auf das Fahrzeug (100) und/oder eine Radgeschwindigkeit eines Rads des Fahrzeugs (100) und/oder einen Lenkwinkel des Fahrzeugs (100) und/oder einen Bremsdruck des Fahrzeugs (100) und/oder ein Antriebsmoment des Fahrzeugs (100) und/oder einen Rutschwinkel des Fahrzeugs (100) und/oder eine Geschwindigkeit des Fahrzeugs (100) und/oder eine Gurtausdehnungslänge und/oder Daten von Sensoren für eine Detektion der Insassenposition darstellt.

9. Verfahren (700, 800) nach einem der vorhergehenden Ansprüche, **dadurch gekennzeichnet, dass** der Schritt des Bereitstellens (720) ein Bereitstellen einer Ereigniskaskade (600a-600d) mit mehreren Kaskadenphasen enthält, wobei eine Phase (610) einer Kaskade (600a-600d) eine Notbremsung und/oder einen Fahrzeugzusammenstoß und/oder ein Unter- oder Übersteuern und/oder einen Wechsel zu einem problematischen Fahruntergrund und/oder eine Motorschubdrosselung und/oder eine Fahrt auf einem Gefälle oder auf einer Rampe und/oder einen Seitenkontakt des Fahrzeugs (100) mit einem Hindernis und/oder ein Aufprall eines Objekts auf das Fahrzeug (100) außerhalb des Bereichs der Insassenkabine und/oder einen freien Flug des Fahrzeugs und/oder eine Fahrzeugnickbewegung und/oder eine kritische Straßenhaftung und/oder einen anomalen Rollwiderstand oder eine Qualifikation eines Aufprallobjekts mittels eines vorausschauenden Sensorsystems darstellt.

10. Verfahren nach einem der vorhergehenden Ansprüche, **dadurch gekennzeichnet, dass** in dem Schritt des Bereitstellens eine der einzelnen Ereigniskaskaden (600a-600d) auf der Basis der einzelnen Ereignisse (610), die den in aufeinander folgenden Zeitintervallen zu empfangenden Werten der Parametersignale entsprechen, ausgewählt wird, und wobei in dem Schritt des Freigebens ein eindeutiges Sicherheitsmittel entsprechend der detektierten Ereigniskaskade (600a-600d) freigegeben wird.

11. Steuervorrichtung (130), die konfiguriert ist, die Schritte eines Verfahrens (700, 800) nach einem der Ansprüche 1 bis 10 auszuführen und/oder zu steuern.

12. Computerprogrammprodukt mit einem Programmcode, der auf einem maschinenlesbaren Träger gespeichert ist, zur Ausführung und/oder zur Steuerung der Schritte des Verfahrens (700, 800) nach einem der Ansprüche 1 bis 10, wenn das Programm auf einer Steuervorrichtung (130) oder auf einem Datenverarbeitungssystem ausgeführt wird.

## Revendications

1. Procédé (700) permettant l'activation de moyens de sécurité passager (140, 150, 160) dans un véhicule (100), le procédé (700) comprenant les étapes suivantes :
- la réception (710, 540) d'une pluralité de signaux de paramètres en provenance de différents capteurs, les signaux de paramètres représentant différentes variables physiques au cours d'une conduite du véhicule (100) ;
- la fourniture (720) d'au moins une parmi plusieurs cascades d'événements individuels (600a-600d), les cascades d'événements (600a-600d) représentant une séquence temporelle prédéfinie de valeurs d'une pluralité des signaux de paramètres à recevoir ;
- la libération (730, 530) d'un déclenchement des moyens de sécurité passager (140, 150, 160) dans le véhicule (100) si un ordre chronologique de valeurs de différents signaux de paramètres correspond à des valeurs des cascades d'événements (600a-600d) fournies ; et
- le déclenchement (740, 520) des moyens de sécurité passager (140, 150, 160) libérés si au moins un des signaux de paramètres ou une combinaison des signaux de paramètres répond à un critère de déclenchement.

2. Procédé (800) permettant l'activation de moyens de sécurité passager (140, 150, 160) dans un véhicule (100), le procédé (800) comprenant les étapes suivantes :
- la réception (810, 540) d'une pluralité de signaux de paramètres en provenance de différents capteurs, les signaux de paramètres représentant différentes variables physiques au cours d'une conduite du véhicule (100) ;
- la libération (820, 530) d'un déclenchement des moyens de sécurité passager (140, 150, 160) dans le véhicule (100) lorsqu'une pluralité des signaux de paramètres est reçue au cours d'un intervalle de temps prédéfini ; et
- le déclenchement (740, 520) des moyens de sécurité passager (140, 150, 160) libérés si au moins un des signaux de paramètres ou une combinaison des signaux de paramètres répond à un critère de déclenchement.

3. Procédé (700, 800) selon l'une des revendications précédentes, **caractérisé en ce que** l'étape de libération (720, 530) comprend un traitement de signaux effectué préalablement à un traitement de signaux associé à l'étape de déclenchement (740, 520) et indépendamment de celui-ci.

4. Procédé (700, 800) selon l'une quelconque des revendications précédentes, **caractérisé en ce que** l'étape de libération (720) comprend une libération de moyens de sécurité passager (140, 150, 160) irréversibles.

5. Procédé (700, 800) selon l'une quelconque des revendications précédentes, **caractérisé en ce que** l'étape de libération (720) comprend une libération de moyens de sécurité passager (140, 150, 160) à long terme conçus pour offrir une fonction de sécurité à un occupant du véhicule (100) pendant au moins un quart de seconde, avantageusement au moins une demi-seconde et mieux encore au moins une seconde.

6. Procédé (700, 800) selon l'une quelconque des revendications précédentes, **caractérisé en ce que** l'étape de libération (720) comprend en outre une libération de moyens de sécurité passager (140, 150, 160) réversibles.

7. Procédé (700, 800) selon l'une quelconque des revendications précédentes, **caractérisé en ce que** l'étape de libération (720) comprend l'instauration d'un paramètre d'autorisation lorsque des valeurs de signaux de paramètres reçus en premier correspondent à des premiers stades de la cascade d'événements (600a-600d), et dans lequel l'étape de libération comprend la réinitialisation (270) du paramètre d'autorisation lorsque des valeurs de signaux de paramètres reçus par la suite ne correspondent plus à des valeurs de stades suivants de la cascade d'événements (600a-600d).

8. Procédé (700, 800) selon l'une quelconque des revendications précédentes, **caractérisé en ce que** l'étape de réception (710) comprend la réception d'au moins un signal de paramètre représentant une accélération du véhicule, une vitesse de rotation du véhicule, une pression exercée sur le véhicule (100), une vitesse de roue d'une roue du véhicule (100), un angle de braquage du véhicule (100), une pression de freinage du véhicule (100), un couple moteur du véhicule (100), un angle de dérive du véhicule (100), une vitesse du véhicule (100), une longueur de déroulement de ceinture et/ou des données issues de capteurs de détection d'une position d'occupant.

9. Procédé (700, 800) selon l'une quelconque des revendications précédentes, **caractérisé en ce que** l'étape de fourniture (720) comprend la fourniture d'une cascade d'événements (600a-600d) comportant une pluralité de stades de cascade, au moins un stade (610) de la cascade d'événements (600a-600d) représentant un freinage d'urgence, une collision du véhicule, un sous-virage ou un survirage, un passage sur un sol problématique, une sortie de courbe, une conduite en pente ou sur rampe, un contact latéral du véhicule (100) avec un obstacle, un impact d'un objet sur le véhicule (100) hors de la zone de l'habitacle, un vol libre du véhicule, un cabré du véhicule, une adhérence critique au sol, une résistance anormale au roulement ou une qualification d'un objet de collision au moyen d'un système capteur par anticipation.

10. Procédé selon l'une quelconque des revendications précédentes, **caractérisé en ce que** l'étape de fourniture d'une des cascades d'événements individuels (600a à 600d) est sélectionnée sur la base des événements individuels (610) correspondant aux valeurs de signaux de paramètres à recevoir dans des intervalles de temps successifs, et dans lequel, à l'étape de libération, un moyen de sécurité distinct correspondant à la cascade d'événements (600a à 600d) détectée est libéré.

11. Dispositif de commande (130), conçu pour mettre en oeuvre et/ou commander les étapes d'un procédé (700, 800) selon l'une quelconque des revendications 1 à 10.

12. Produit-programme d'ordinateur comportant un code de programme enregistré sur un support lisible par machine, pour mettre en oeuvre et/ou commander les étapes du procédé (700, 800) selon l'une quelconque des revendications 1 à 10 lors de l'exécution du programme sur un dispositif de commande (130) ou un système de traitement de données.
